# EUROPÄISCHE PATENTSCHRIFT

(11) **EP 2 788 617 B1**
(45) Veröffentlichungstag und Bekanntmachung des Hinweises auf die Patenterteilung: **07.08.2019**
(21) Anmeldenummer: 12791766.4
(22) Anmeldetag: 28.11.2012
(51) Int. Cl.: F03D 1/06

(54) **ROTORBLATT UND VERBINDUNGSVORRICHTUNG**
ROTOR BLADE AND CONNECTING DEVICE
PALE DE ROTOR ET DISPOSITIF D'ASSEMBLAGE

(30) Priorität: 08.12.2011 DE 102011088025; 19.11.2012 DE 102012221117
(43) Veröffentlichungstag der Anmeldung: 15.10.2014
(73) Patentinhaber: Wobben Properties GmbH, 26607 Aurich (DE)
(72) Erfinder: KANNENBERG, Johannes, 26603 Aurich (DE); HOFFMANN, Alexander, 26721 Emden (DE)
(74) Vertreter: Eisenführ Speiser
(86) Internationale Anmeldenummer: PCT/EP2012/073793
(87) Internationale Veröffentlichungsnummer: WO 2013/083451

(56) Entgegenhaltungen:
- EP-A2- 1 950 414
- DE-A1- 3 109 566
- DE-C1- 19 733 372
- DE-U1-202011 101 634
- US-A1- 2009 226 320

## Beschreibung

Die vorliegende Erfindung betrifft ein Rotorblatt einer Windenergieanlage, insbesondere ein im Wesentlichen zweigeteiltes Rotorblatt. Ferner betrifft die vorliegende Erfindung eine Windenergieanlage mit einem solchen Rotorblatt.

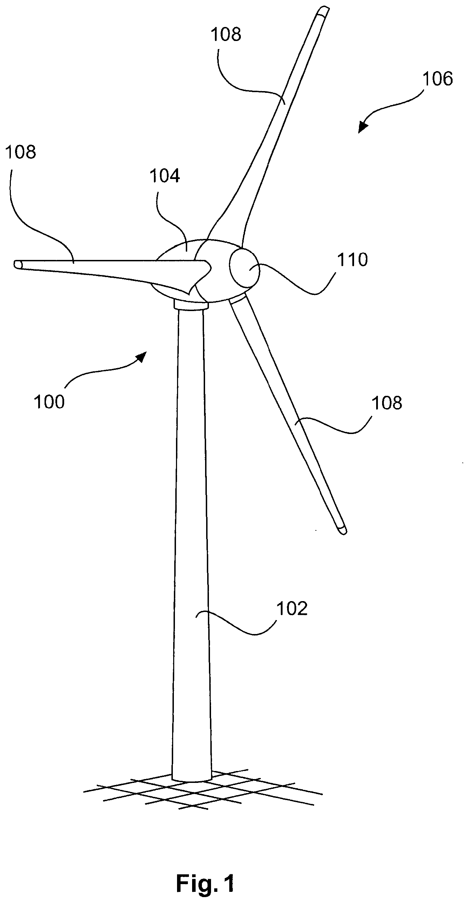

Rotorblätter von Windenergieanlagen sind hinlänglich bekannt. Die vorliegende Erfindung betrifft insbesondere Rotorblätter einer sogenannten Horizontal-Achsen-Windenergieanlage, nämlich eine Windenergieanlage bei der ein oder mehrere Rotorblätter einen aerodynamischen Rotor bilden und bestimmungsgemäß um eine im Wesentlichen horizontale Achse, die auch geringfügig gekippt sein kann, rotieren. Eine solche Windenergieanlage ist auch in der Fig. 1 dargestellt.

Moderne Windenergieanlagen weisen dabei heutzutage zunehmend größere Rotordurchmesser und damit längere Rotorblätter auf. Dabei ergeben sich durch die größer werdenden Rotorblätter zunehmend Probleme beim Transport der Rotorblätter zum Aufstellungsort.

Beispielsweise ist von der Windenergieanlage des Typs E126 des Herstellers Enercon bekannt, ein geteiltes Rotorblatt zu verwenden, das unter anderem in Richtung der Rotorblattlängsachse in zwei Teile unterteilt ist, ein inneres Teil und ein äußeres Teil. Hierbei ist das innere Teil aus Stahl gefertigt. Entsprechend entsteht ein Rotorblatt mit hoher Masse, was in mehrerlei Hinsicht ungünstig sein kann. Es wird das Gewicht des Rotors der Windenergieanlage erhöht und damit auch das Gewicht der Gondel der Windenergieanlage. Um die höheren Massen des Rotors an der Gondel aufnehmen zu können, können auch dort Änderungen erforderlich werden, die zu einer zusätzlichen Gewichtserhöhung der Gondel führen können. Darüber hinaus ist auch der Transport und auch insbesondere die Installation solcher Rotorblattteile aus Stahl aufwendig und macht den Einsatz eines entsprechend großen und für die betreffenden Lasten ausgelegten Krans erforderlich.

Das deutsche Patent- und Markenamt hat in der Prioritätsanmeldung folgenden Stand der Technik recherchiert: DE 10 2006 014 742 B4, DE 199 62 989 B4, DE 10 2006 022 279 A1, DE 20 2011 101 634 U1, EP 1 798 412 A2 und EP 1 398 499 A1. Zudem wird auf das Dokument EP 1 950 414 A2 hingewiesen. Das Dokument betrifft ein teilbares Rotorblatt für eine Windenergieanlage, wobei das Rotorblatt ein Zusammenbau aus zwei Rotorblattabschnitten 1T und 1R geteilt in Rotorblattlängsrichtung besteht. Die Verbindung umfasst Metallverbindungselemente. Zudem betrifft das Dokument eine Blitzableitungsstruktur für das Rotorblatt. Ein Verbindungselement erstreckt sich in der Rotorblattfläche des Rotorblatts 1T und ist verbunden mit einem Kabel der Blitzableitungsstruktur durch andere Verbindungselemente. US 2009 0226320 A1 betrifft ein teilbares Rotorblatt aus dem Stand der Technik.

Aufgabe der vorliegenden Erfindung war es somit, wenigstens eines der oben genannten Probleme zu adressieren. Insbesondere soll ein möglichst leichtes und gleichzeitig großes und ein verhältnismäßig einfach transportierbares Rotorblatt angestrebt werden. Zumindest soll eine alternative Lösung vorgeschlagen werden.

Erfindungsgemäß wird ein Rotorblatt gemäß Anspruch 1 vorgeschlagen.

Ein solches Rotorblatt einer Windenergieanlage ist zur Befestigung an einer Rotornabe vorgesehen und weist eine Rotorblattlängsachse auf. Das Rotorblatt umfasst wenigstens ein Rotorblattinnenteil und ein Rotorblattaußenteil. Das Rotorblattinnenteil ist bestimmungsgemäß zur Rotornabe gewandt und wird dabei vorzugsweise direkt oder indirekt an der Rotornabe befestigt. Das Rotorblattaußenteil ist von der Rotornabe abgewandt, weist somit zu einer Rotorblattspitze und kann diese auch mit umfassen. Das Rotorblatt besteht somit mit im Wesentlichen in Rotorblattlängsachse aus dem Rotorblattinnenteil und dem Rotorblattaußenteil. Weitere Elemente wie ein Rotorblatthinterkasten, der das Rotorblatt insbesondere im nabennahen Bereich verbreitet, können außerdem vorgesehen sein. Dass das Rotorblatt im Wesentlichen aus dem Rotorblattinnenteil und dem Rotorblattaußenteil besteht, ist insbesondere im Sinne der örtlichen Ausdehnung entlang der Rotorblattlängsachse zu verstehen. Das Rotorblatt erstreckt sich nämlich insbesondere von der Rotornabe zur Rotorblattspitze so, dass sich das Rotorblattinnenteil von der Rotornabe bis zum Rotorblattaußenteil erstreckt und dass sich das Rotorblattaußenteil vom Rotorblattinnenteil zur Rotorblattspitze erstreckt.

Das Rotorblattaußenteil und das Rotorblattinnenteil weisen im Bereich des Verankerungselementes sowie im Bereich des Gegenelementes jeweils einen Verankerungsbereich mit erhöhter Materialstärke der Rotorblattschale auf. In dem Verankerungsbereich ist für jede Verbindungsvorrichtung eine Längsbohrung vorgesehen, die im Wesentlichen parallel zur Rotorblattlängsachse oder parallel zur Rotorblattoberfläche verläuft. Die Längsbohrung im Rotorblattaußenteil verläuft von einer Stoßfläche zum Ansetzen an das Rotorblattinnenteil zu einer Querbohrung zur Aufnahme des Verankerungselementes, so dass der Verbindungsbolzen von der Stoßfläche bis zum Verankerungselement reichen kann. Die Längsbohrung in dem Rotorblattinnenteil verläuft von einer Stoßfläche zum Ansetzen an das Rotorblattaußenteil vollständig durch den Verankerungsbereich hindurch, um in einem Innenbereich des Rotorblattinnenteils zu enden, in dem die Materialstärke so dünn ist, dass die Bohrung vollständig aus dem Verankerungsbereich hervortritt, so dass der Verbindungsbolzen von der Stoßfläche über den Innenbereich reichen kann.

Das Rotorblattinnenteil ist mit dem Rotorblattaußenteil mittels wenigstens einer Verbindungsvorrichtung miteinander verbunden. Vorzugsweise sind mehrere Verbindungsvorrichtungen vorgesehen, insbesondere eine Vielzahl wie beispielsweise 20 bis 50 Verbindungsvorrichtungen oder noch mehr Verbindungsvorrichtungen. Jede dieser Verbindungsvorrichtungen, zumindest aber eine davon umfasst wenigstens ein in dem Rotorblattaußenteil verankertes Verankerungselement. Dieses Verankerungselement ist insbesondere in dem Rotorblattaußenteil eingebettet. Es kann direkt beim Herstellen des Rotorblattes angeordnet werden oder es kann durch Vorsehen entsprechender Öffnungen wie beispielsweise Bohrungen im Nachhinein in dem Rotorblattaußenteil verankert werden.

Außerdem umfasst die Verbindungsvorrichtung wenigstens ein in dem Rotorblattinnenteil verankertes Gegenelement. Dieses Gegenelement kann, ähnlich wie das Verankerungselement in dem Rotorblattaußenteil, in dem Rotorblattinnenteil eingebettet sein, nämlich beim Herstellen des Rotorblattinnenteils mit angeordnet werden oder nachträglich in dem Rotorblattinnenteil angeordnet und verankert werden.

Weiterhin ist ein Verbindungsbolzen vorgesehen, der in dem Verankerungselement befestigt und damit über das Verankerungselement und über dem Rotorblattaußenteil verankert ist. Der Verbindungsbolzen reicht dann von dem Verankerungselement und damit von dem Rotorblattaußenteil zum Rotorblattinnenteil und dort durch das Gegenelement hindurch. Vorzugsweise ist der Verbindungsbolzen dabei nicht in dem Gegenelement befestigt. Insbesondere ist er in Längsrichtung des Verbindungsbolzens grundsätzlich verschiebbar, solange er nicht durch ein weiteres Element wie ein Verspannelement fixiert wird. Insbesondere weist das Gegenelement kein Innengewinde auf.

Gemäß einer Ausführungsform ist das Rotorblatt dadurch gekennzeichnet, dass das Rotorblattinnenteil und/oder das Rotorblattaußenteil jeweils im Wesentlich aus einem faserverstärkten Kunststoff besteht. Insbesondere wird ein glasfaserverstärkter Kunststoff oder kohlefaserverstärkter Kunststoff für eines der beiden Teile oder für beide Teile vorgeschlagen. Die erfindungsgemäße Lösung schafft dabei eine besonders günstige Möglichkeit, zwei Rotorblattteile aus faserverstärktem Kunststoff miteinander zu verbinden. Das Verankerungselement und/oder das Gegenelement können grundsätzlich beim Herstellen eines solchen faserverstärkten Kunstoffs eingebettet werden. Insbesondere von Harz oder in Kunststoff getränkten Glasfaser- oder Kohlefasermatten umgeben werden.

Eine bevorzugte Möglichkeit besteht aber darin, dass Rotorblattinnenteil und/oder das Rotorblattaußenteil zunächst ohne das Verankerungselement bzw. das Gegenelement auszubilden und diese später einzusetzen. Das Verankerungselement und das Gegenelement sind somit als eigenständige Elemente ausgebildet, die vorzugsweise selbst nicht aus faserverstärktem Kunststoff sondern insbesondere aus Metall gefertigt sind. Insoweit besteht das Rotorblattinnenteil und/oder das Rotorblattaußenteil nicht vollständig aus faserverstärktem Kunststoff, weil beispielsweise Zusatzelemente wie auch ein solches Verankerungselement oder Gegenelement enthalten sind, die nicht aus faserverstärktem Kunststoff bestehen. Zudem können in dem faserverstärktem Kunststoff weitere Elemente, wie beispielsweise Verstärkungselemente aus anderen Materialien als faserverstärkter Kunststoff vorgesehen sein, wie beispielsweise auch Holzelemente.

Beim Verbinden solcher Rotorblattteile aus faserverstärktem Kunststoff nehmen das Verankerungselement und das Gegenelement zunächst entsprechende Verbindungskräfte auf, die vorzugsweise auf viele Verbindungsvorrichtungen und damit auf viele Verankerungselemente und Gegenelemente verteilt werden. Diese Verbindungskraft wird dann von den Verankerungselementen beziehungsweise Gegenelementen in das Material des Rotorblattaußenteils bzw. des Rotorblattinnenteils eingeleitet. Die Kraft wird somit gestreut und hohe punktuelle Kräfte, die auf einen faserverstärkten Kunststoff wirken, werden vermieden.

Vorzugsweise ist das Verankerungselement als Querbolzen ausgebildet, mit einer im Wesentlichen quer zur Rotorblattlängsachse angeordneten Bolzenachse. Vorzugsweise ist das wenigstens eine Verankerungselement in einer Schale des Rotorblattaußenteils angeordnet und weist mit seiner Bolzenachse zum inneren Bereich insbesondere zum Innenraums des Rotorblattaußenteils. Hierbei kann das Verankerungselement auf einfache Weise in Richtung der Bolzenachse in eine entsprechende Bohrung oder andere Öffnung in der Schale des Rotorblattaußenteils eingesetzt und dort verankert werden.

Günstig ist es, das Verankerungselement mit einer quer zur Bolzenachse und bestimmungsgemäß im Wesentlichen parallel zur Rotorblattlängsachse angeordneten Bohrung mit Innengewinde vorzusehen. In dieser Bohrung mit Innengewinde kann der Verbindungsbolzen befestigend aufgenommen werden, insbesondere kann der Verbindungsbolzen in ein solches Innengewinde eingeschraubt werden. Diese Ausgestaltung kann derart vorbereitet werden, dass das Verankerungselement als Querbolzen in eine entsprechende Öffnung insbesondere Bohrung im Grunde von Außen nach Innen in die betreffende Schale des Rotorblattaußenteils eingeschoben wird, verankert wird.

Außerdem ist eine etwa parallel zur Rotorblattlängsachse ausgebildete Längsbohrung vorgesehen, die von einer Stoßfläche des Außenteils, die zum Ansetzen an eine Stoßfläche des Rotorblattinnenteils vorgesehen ist, bis zum entsprechenden Verankerungselement vorgenommen wird. Durch diese Bohrung, die vorgenommen werden kann während das Verankerungselement noch nicht eingesetzt ist, kann der Verbindungsbolzen eingeschoben und schließlich in die entsprechende Bohrung mit Gewinde in dem Verankerungselement eingeschraubt werden. Der Verbindungsbolzen ist in dieser Position im Wesentlichen fest in dem Rotorblattaußenteil verankert. Vorzugsweise werden auf diese Art und Weise sehr viele Verankerungselemente mit Verbindungsbolzen in dem Rotorblattaußenteil vorgesehen. Zum Herstellen einer Verbindung zwischen Rotorblattaußenteil und Rotorblattinnenteil kann es aber vorteilhaft sein, die Verbindungsbolzen zunächst nicht in dem Verankerungselement zu befestigen.

Vorzugsweise wird vorgeschlagen, dass das Gegenelement als Querbolzen ausgebildet ist, mit einer im Wesentlichen quer zur Rotorblattlängsachse angeordneten Bolzenachse. Auch ist es günstig das Gegenelement in einer Schale des Rotorblattinnenteils anzuordnen, insbesondere mit der Bolzenachse zum Inneren insbesondere Innenraum des Rotorblattinnenteils gerichtet. Hierzu kann eine entsprechende Bohrung in der Schale des Rotorblattaußenteils für jedes Gegenelement vorgesehen sein.

Vorzugsweise wird eine Bohrung von einer bzw. der Stoßfläche des Rotorblattinnenteils, die zum Ansetzen an eine bzw. die Stoßfläche des Rotorblattaußenteils vorgesehen ist, wenigstens bis zur vorgesehenen Position des Gegenelementes vorgenommen. Eine solche Bohrung ist ebenfalls im Wesentlichen parallel zur Rotorblattlängsachse vorzusehen. Vorzugsweise verläuft eine solche Längsbohrung im Rotorblattaußenteil von einer bzw. der Stoßfläche zum Ansetzen an das Rotorblattaußenteil vollständig durch einen bzw. den Verankerungsbereich des Rotorblattinnenteils hindurch, bis zu einem Innenbereich des Rotorblattinnenteils wo die Längsbohrung durch die Abnahme der Materialstärke zutage tritt.

Zum Verbinden des Rotorblattaußenteils mit dem Rotorblattinnenteil wird somit vorgeschlagen, dass der Verbindungsbolzen vom Verankerungselement und damit vom Rotorblattaußenteil durch die entsprechende Längsbohrung zum Rotorblattinnenteil und dort weiter durch das Gegenelement reicht. Somit ist der Verbindungsbolzen zunächst mit dem Verankerungselement fest verbunden, nicht aber mit dem Gegenelement. Die Befestigung erfolgt dann an einer zum Verankerungselement abgewandten Seite des Gegenelementes mit einem Spannmittel, insbesondere einer Schraubenmutter, zum Verspannen gegen das Gegenelement, um dadurch das Verankerungselement und das Gegenelement aneinander zu ziehen. Das Spannmittel wird somit auf den Verbindungsbolzen aufgesetzt und auf diesem an das Gegenelement geschoben. Das kann bspw. so erfolgen, dass auf dem Verbindungsbolzen ein entsprechendes Außengewinde vorgesehen ist, auf dem das Spannmittel direkt oder indirekt gegen das Gegenelement geschraubt wird.

Vorzugsweise ist zwischen dem Gegenelement und dem Spannmittel eine Dehnhülse angeordnet, insbesondere über den Verbindungsbolzen geschoben. Das Spannmittel stellt dann eine Verspannung indirekt über diese Dehnhülse her.

Am Beispiel einer Schraubenmutter als Spannelement wird diese auf den Verbindungsbolzen in Richtung auf das Gegenelement geschraubt, schiebt dabei die Dehnhülse gegen das Gegenelement und stellt dadurch die Verspannung her. Die Dehnhülse gibt hierbei elastisch nach, so dass eine Spannkraft ausgeübt wird. Beim Auftreten leichter Materialermüdungserscheinungen, wenn beispielsweise sich der Verbindungsbolzen minimal streckt, das Material des Rotorblattaußenteils und/oder das Rotorblattinnenteils, das zwischen dem Verankerungselement und dem Gegenelement angeordnet ist, etwas nachgibt, so kann die Dehnhülse einer solchen Materialermüdung entgegenwirken, indem sie sich ausdehnt wobei die Kräfte der Verspannung zumindest teilweise aufrecht erhalten bleiben.

Vorzugsweise weist das Gegenelement im Bereich der Durchgangsbohrung eine abgeflachte oder anderweitig zum Ansetzen des Spannmittels oder der Dehnhülse angepasste Anlageflache auf. Hierdurch kann die von dem Spannmittel und/oder der Dehnhülse beim Verspannen auf das Gegenelement wirkende Kraft verteilt werden. Dies ist insbesondere dann vorteilhaft, wenn das Gegenelement als zylindrischer Querbolzen, insbesondere mit Kreisquerschnitt ausgebildet ist.

Ein Rotorblatt wird vorgeschlagen, wobei das Rotorblattaußenteil im Bereich des Verankerungselementes und außerdem oder alternativ das Rotorblattinnenteil im Bereich des Gegenelementes jeweils einen Verankerungsbereich mit höherer Materialstärke als der übrigen Rotorblattschale aufweist, oder mit einer höheren Materialstärke als die durchschnittliche Materialstärke der Rotorblattschale. Somit ist ein umlaufender verdeckter Bereich vorgesehen, wobei diese Verdickung bzw. erhöhte Materialstärke nach innen, also radial nach innen vorgesehen ist. Insbesondere ist in dem Verankerungsbereich des Rotorblattaußenteils und/oder das Rotorblattinnenteils für jede Verbindungsvorrichtung eine Längsbohrung vorgesehen. Diese ist im Wesentlichen parallel zur Rotorblattlängsachse und damit auch zumindest in etwa parallel zu der Rotorblattoberfläche in dem betreffenden Bereich. Bei Verwendung vieler Verbindungsvorrichtungen sind somit viele Längsbohrungen vorgesehen, die insbesondere etwa gleichmäßig in Umfangsrichtung in dem Verankerungsbereich verteilt sind.

Vorzugsweise verläuft die Längsbohrung im Rotorblattaußenteil von einer Stoßfläche zum Ansetzen an das Rotorblattinnenteil zu einer Querbohrung zum Aufnehmen des Verankerungsabschnitts, so dass der Verbindungsbolzen von der Stoßfläche bis zum Verankerungsbolzen reichen kann.

Für das Rotorblattinnenteil wird vorzugsweise vorgeschlagen, dass die Längsbohrung im Rotorblattinnenteil mit einer Stoßfläche zum Ansetzen das Rotorblattaußenteil vollständig durch den Verankerungsbereich hindurch verläuft, um in einem Innenbereich des Rotorblattinnenteils zu enden, indem die Materialstärke so dünn ist, das die Bohrung vollständig aus der Verankerungsbereich hervortritt, so dass der Verbindungsbolzen von der Stoßfläche bis in den Innenbereich reichen kann. Demnach werden unterschiedliche Ausgestaltungen der Längsbohrung im Rotorblattaußenteil einerseits und im Rotorblattinnenteil andererseits vorgeschlagen. Im Rotorblattinnenteil bildet die Längsbohrung eine Durchgangsbohrung, wohingegen sie im Rotorblattaußenteil nur bis zum entsprechenden Querbolzen reicht und auch als Sackloch bezeichnet werden kann.

Hierdurch wird ermöglicht, dass der Verbindungsbolzen vom Verankerungsbolzen zum Rotorblattinnenteil verläuft und dort vollständig durch den Verankerungsbereich verläuft, nämlich in beiden Fällen entlang der Längsbohrung. Ein Ende des Verbindungsbolzens ist somit im Verankerungsbolzen befestigt und damit dort verankert und das andere Ende des Verbindungsbolzens ragt aus dem Verankerungsabschnitt des Rotorblattinnenteils heraus und dabei dort in den inneren Bereich des Rotorinnenteils hinein. An diesem zweiten Ende kann somit auf einfache Weise ein Spannmittel angeordnet und von dem Innenbereich des Rotorblattinnenteils aus betätigt werden, insbesondere festgezogen werden. Die Verbindung des Rotorblattaußenteils mit dem Rotorblattinnenteil ist somit auf eine einfache Art und Weise möglich, die ein Verspannen vom Rotorblattinnenteil aus ermöglicht. Das Rotorblattaußenteil braucht somit nicht betreten zu werden. Die Verbindung das Festziehen und Verspannen kann dabei sowohl vor der Installation des Rotorblattes an der Windenergieanlage erfolgen, wie beispielsweise vor Ort auf der Baustelle vorm Hochziehen und Installieren des Rotorblattes. Alternativ kann auch eine Verbindung erfolgen, wenn das Rotorblattinnenteil bereits an der Rotornabe befestigt ist. Bei waagerecht stehendem Rotorblattinnenteil kann dieses, je nach Bauform und Größe, ohne Weiteres von der Nabe aus von Innen betreten werden.

Ebenso ist es auf einfache Weise und ohne Servicepersonal unnötigen Gefahren auszusetzen, möglich, die Verbindung des Rotorblattaußenteils mit dem Rotorblattinnenteil auf Ihre Festigkeit beispielsweise nach einem Wartungsintervall zu überprüfen. Ebenso kann hier das Rotorblattaußenteil abgenommen und getauscht werden, indem Servicepersonal die Verbindung der beiden Rotorblattteile von dem Rotorblattinnenteil aus löst.

Gemäß einer weiteren Ausführungsform ist die Verbindungsvorrichtungen, oder jeweils ein Teil davon in mehreren Reihen, insbesondere bezogen auf eine Rotorblattmittelachse, in einer inneren und einer äußeren Reihe angeordnet, Die auftretenden Lasten können dadurch auf einen breiteren Bereich verteilt werden. Bei Verwendung einer inneren und einer äußeren Reihe liegt somit eine zweireihige Ausführung vor. Die Verwendung mehrerer Reihen führt insbesondere zu einer Verbreiterung des Lastbereichs im Vergleich zu der Verwendung nur einer Reihe,
Vorzugsweise oder alternativ weisen die Verbindungsvorrichtungen jeweils mehrere Verbindungsbolzen auf. Vorteilhaft ist dabei eine Ausführung, bei der eine Verbindungsvorrichtung jeweils ein Verankerungselement, ein Gegenelement und mehrere, insbesondere zwei Verbindungsbolzen aufweist. Bei der Verbindung der beiden Rotorblattteile miteinander werden jeweils ein Verankerungselement und ein Gegenelement gegeneinander verspannt. Durch das Vorsehen mehrerer Verbindungsbolzen werden bei dieser Verspannung entsprechende Spannkräfte jeweils über das Verankerungselement und über das Gegenelement verteilt.

Eine weitere Ausführungsform schlägt vor, dass die Verbindungsvorrichtung so ausgebildet ist, dass der bzw. jeder Verbindungsbolzen durch das Verankerungselement hindurch zu einer Dehnhülse reicht und in der Dehnhülse an einem zum Verankerungselement abgewandten Befestigungsabschnitt mit der Dehnhülse verschraubt ist, Es ergibt sich dadurch ein Dehnabschnitt der Dehnhülse zwischen dem Befestigungsabschnitt und dem Verankerungselement, an dem die Dehnhülse anliegt und gegen den die Dehnhülse im verspannten Zustand der Verbindungsvorrichtung durch den Verbindungsbolzen gezogen wird. Hierdurch kann die Dehnhülse eine Spannung zum Verspannen der Verbindungsvorrichtung vorhalten, ohne dass das Verspannen an einem Verspannmittel unmittelbar an der Dehnhülse vorgenommen werden muss.

Außerdem wird eine Verbindungsvorrichtung zum Verbinden eines Rotorblattinnenteils mit einem Rotorblattaußenteil vorgeschlagen. Die Verbindungsvorrichtung ist so ausgebildet, wie sich oben aus der Beschreibung der Verbindung des Rotorblattinnenteils mit dem Rotorblattaußenteil ergibt.

Ebenfalls wird eine Windenergieanlage vorgeschlagen, die wenigstens ein Rotorblatt, insbesondere drei Rotorblätter aufweist, das bzw. die gemäß wenigstens einer beschriebenen Ausführungsform eines erfindungsgemäßen Rotorblattes ausgestaltet ist.

Nachfolgend wird die Beschreibung anhand von Ausführungsbeispielen unter Bezugnahme auf die begleitenden Figuren näher erläutert.
- Fig. 1: zeigt eine Windenergieanlage in einer perspektivischen Darstellung.
- Fig. 2: zeigt ein geteiltes Rotorblatt perspektivisch in einer an eine Explosionsdarstellung angelehnten Darstellung.
- Fig. 3: zeigt einen Ausschnitt eines geteilten Rotorblattes.
- Fig. 4: zeigt eine Schnittansicht eines Verbindungsbereichs eines geteilten Rotorblattes.
- Fig. 5: zeigt eine Draufsicht auf eine Stoßfläche eines Rotorblattinnenteils.
- Fig. 6: zeigt einen Verbindungsbereich eines Rotorblattinnenteils in einer perspektivischen Darstellung.
- Fig. 7: zeigt einen Verbindungsbereich eines Rotorblattinnenteils in einer weiteren perspektivischen Darstellung
- Fig. 8: zeigt einen Verbindungsbereich eines Rotorblattinnenteils in einer perspektivischen Schnittansicht.
- Fig. 9: zeigt eine Verbindungsvorrichtung, die nicht Teil der Erfindung ist, in einer perspektivischen Ansicht.
- Fig. 10: zeigt einen Teil eines Verbindungsbereiches eines Rotorblattaußenteils, das nicht Teil der Erfindung ist, in einer perspektivischen Ansicht.
- Fig. 11: zeigt den Teil des Verbindungsbereiches gemäß Figur 10 mit eingesetzten Teilen von Verbindungsvorrichtungen.
- Fig. 12: zeigt eine axiale Draufsicht auf den Verbindungsbereich der Fig. 11.
- Fig. 13: zeigt einen Teil eines Verbindungsbereiches eines Rotorblattinnenteils das nicht Teil der Erfindung ist, in einer perspektivischen Ansicht.
- Fig. 14: zeigt den Teil des Verbindungsbereiches gemäß Figur 13 mit eingesetzten Teilen von Verbindungsvorrichtungen.

Nachfolgend können identische Bezugszeichen ähnliche aber nicht identische Elemente bezeichnen, um deren funktionalen Zusammenhang zu unterstreichen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

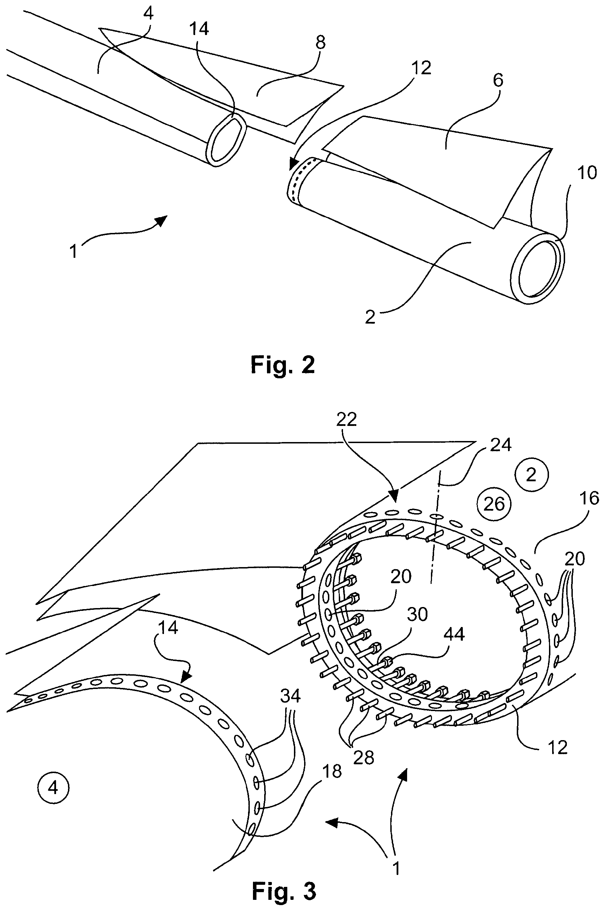

Das schematisch dargestellte Rotorblatt 1 der Fig. 2, das auch als geteiltes Rotorblatt 1 bezeichnet werden kann, weist ein Rotorblattinnenteil 2 und ein Rotorblattaußenteil 4 auf. Weiterhin ist ein inneres Hinterkantensegment 6 dargestellt, das an dem Rotorblattinnenteil zu befestigen ist, und entsprechend ist ein äußeres Hinterkantensegment 8 vorgesehen, das an dem Rotorblattaußenteil 4 zu befestigen ist.

Das Rotorblattinnenteil 2 weist einen Anschlussflansch 10 zum Befestigen des Rotorblattinnenteils an einer Rotornabe oder an einem entsprechenden Nabenadapter auf. Zudem ist eine Außenblattansatzfläche 14 an dem Rotorblattaußenteil 4 zum Ansatz an eine Innenblattansatzfläche 12, die in Fig. 3 zu erkennen ist, vorgesehen. Das Rotorblattinnenteil 2 kann somit mit dem Rotorblattaußenteil 4 derart verbunden werden, dass die Innenblattansatzfläche 12 an die Außenblattansatzfläche 14 gesetzt wird und dann eine Befestigung, insbesondere Verspannung der beiden Rotorblattteile erfolgt.

Fig. 3 zeigt einen Ausschnitt eines geteilten Rotorblattes 1, nämlich im Wesentlichen einen Innenblattbefestigungsbereich 16 des Rotorblattinnenteils 2, der auch die Innenblattansatzfläche 12 beinhaltet. Weiterhin zeigt die Fig. 3 einen Außenblattbefestigungsbereich 16 des Rotorblattaußenteils 4, der auch eine Außenblattansatzfläche 14 aufweist.

Zum Verbinden des Rotorblattinnenteils 2 mit dem Rotorblattaußenteil 4 werden die Innenblattansatzfläche 12 und die Außenblattansatzfläche 14 aneinander gebracht. Zur Befestigung weist das Rotorblattinnenteil 2 in seinem Innenblattbefestigungsbereich 16 eine Vielzahl von Gegenelementen 20 auf, die hier als Querbolzen ausgebildet sind. In dem gezeigten Beispiel sind 36 solcher Querbolzen vorgesehen. Diese als Querbolzen ausgebildeten Gegenelemente 20, bilden jeweils einen Teil einer Verbindungsvorrichtung. Die Gegenelemente 20 sind jeweils in der Innenblattschale 22 im Bereich des Innenblattbefestigungsbereichs 16 angeordnet. Die Innenblattschale 22 weist im Bereich des Innenblattbefestigungsbereichs 16 und damit auch im Bereich der Innenblattansatzfläche 12 eine sehr hohe Materialstärke auf, um die Gegenelemente 20 aufzunehmen. Die Gegenelemente 20 sind im Grunde kranzförmig angeordnet und sitzen im Grunde mit ihrer Bolzenachse 24 senkrecht zur Innenblattschale 22 und damit im Grunde senkrecht zu einer Blattoberfläche 26 in der Innenbiattschale.

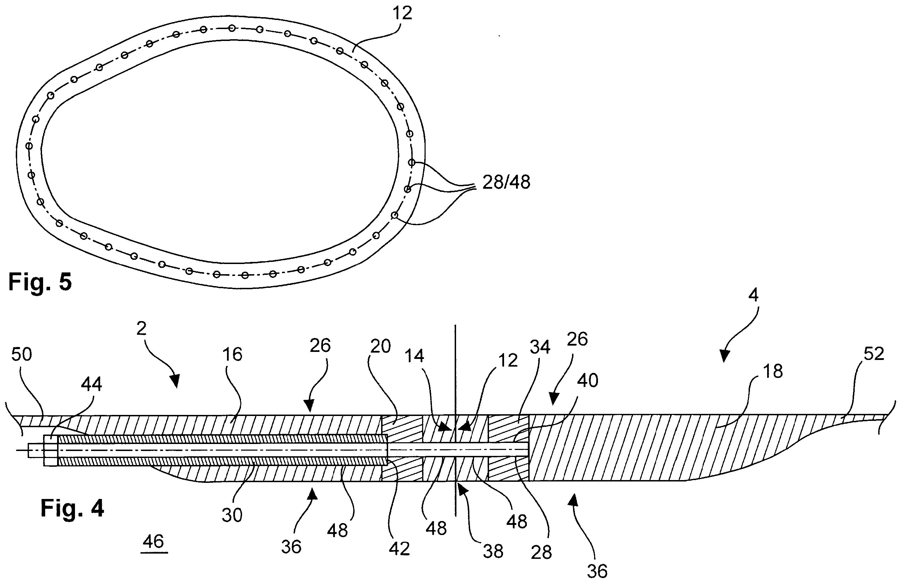

Als weitere Befestigungselemente, die insbesondere in der Fig. 4 noch detailliert beschrieben werden, ist zu jedem Gegenelement 20 ein Verbindungsbolzen 28, eine Dehnhülse 30 und ein Verspannelement 44, das auch als Spannelement bezeichnet werden kann und das hier als Spannschraubenmutter ausgebildet ist, vorgesehen. Der Verbindungsbolzen 28 reicht durch den Innenblattbefestigungsbereich 16, das Gegenelement 20, die Dehnhülse 30 bis zum Verspannelement 44 und kann durch das Verspannelement 44 hindurchreichen.

In dem Rotorblattaußenteil 4 sind in dem Außenblattbefestigungsbereich 18, 36 Verankerungselemente 34 vorgesehen, die jeweils einen Verbindungsbolzen 28 aufnehmen sollen.

Ein Verankerungselement 34 mit einem Verbindungsbolzen 28, einem Gegenelement 20, einer Dehnhülse 30 und einem Verspannelement 44 bilden im Grunde zusammen eine Verbindungsvorrichtung.

Fig. 4 zeigt einen Ausschnitt eines Rotorblattinnenteils 2 mit einem Rotorblattaußenteil 4, die zusammengesetzt miteinander fest verbunden sind. Dieser Ausschnitt zeigt eine Schnittansicht und zeigt dabei im Wesentlichen einen Teil des Innenteilbefestigungsbereichs 16 und des Außenbiattbefestigungsbereichs 18, die hier entsprechend miteinander verbunden sind.

Fig. 4 zeigt dabei nur einen Teil einer umlaufenden Rotorblattschale, wobei gemäß der Darstellung der Fig. 4 die Rotorblattoberfäche 26 und damit die Außenseite des Rotorblatt 1 oben dargestellt ist, wobei eine Rotorblattinnenseite 36 in Fig. 4 nach unten dargestellt ist.

Das Rotorblattinnenteil 2 und das Rotorblattaußenteil 4 sind an ihrer Innenblattanschlussfläche 12 und Außenblattanschlussfläche 14 aneinander gesetzt. Dieser Ansatzbereich kann als Trennstelle 38 bezeichnet werden. Zur Befestigung des Rotorblattinnenteils 2 und das Rotorblattaußenteils 4 miteinander ist ein Verankerungselement 34 also Querbolzen in dem Außenblattbefestigungsbereich 18 angeordnet. In einem Bolzengewinde 40 ist der Verbindungsbolzen 28 in dem Verankerungselement 34 fest verschraubt und damit sind die beiden Elemente fest miteinander verbunden. Der Verbindungsbolzen 28 kann als Gewindebolzen ausgebildet sein und/oder an seinen Enden mit einem Gewinde versehen sein.

Von dem Verankerungselement 34 ausgehend reicht der Verbindungsbolzen 28 zum Rotorblattinnenteil 2 herüber. Dabei verläuft der Verbindungsbolzen 28 quer durch die Innenblattansatzfläche 12 und die Außenblattansatzfläche 14 und damit quer durch die Trennstelle 38.

In dem Rotorblattinnenteil 2 verläuft der Verbindungsbolzen 28 durch das Gegenelement 20 hindurch, wobei das Gegenelement 20 auch im Wesentlichen als Bolzen ausgebildet ist. Der Verbindungsbolzen 28 erstreckt sich weiter durch den Innenblattbefestigungsbereich 16 hindurch, so dass dieser deutlich bis in den Innenraum 42 des Rotorblattinnenteils 2 hineinragt. Zum Verspannen ist auf dem Verbindungsbolzen 28, der auch als Längsbolzen 28 bezeichnet werden kann, zunächst eine Dehnhülse 30 aufgeschoben, die bis zum Gegenelement 20 reicht. Die Dehnhülse 30 liegt dabei an einem abgeflachten Bereich 42 an, der auch als Hülsenaufnahme 42 bezeichnet werden kann. Weiterhin ist auf dem Verbindungsbolzen 28 ein Spannelement 44, nämlich eine Schraubenmutter aufgeschraubt, die beim Festziehen die Dehnhülse 30 gegen das Gegenelement 20 schiebt, bzw. dadurch das Verankerungselement 34 und damit das Rotorblattaußenteil 4 an das Rotorblattinnenteil 2 heranzieht.

Durch die Verwendung der Dehnhülse 30 wird erreicht, dass diese etwaigen leichten Ermüdungserscheinungen des Materials nachgeben kann, sich entsprechend ausdehnt und eine Lockerung oder ein Lösen der Verbindung verhindert. Durch die verwendete Dehnhülse 30 wird unter anderem auch erreicht, dass das Verspannmittel 44, nämlich die Schraubenmutter 44 bzw. Spannmutter 44 im Innenraum 46 angeordnet ist, zumindest vom Innenraum 46 des Rotorblattinnenteils 2 leicht zugänglich ist. Ein Servicemitarbeiter kann somit vom Innenraum 46 des Rotorblattinnenteils 2 aus ein Verspannen und damit ein Festziehen der Verbindung der beiden Rotorblattteile 2 und 4 untereinander ausführen.

Vorzugsweise wird das Rotorblatt 1 im Verbindungsbereich so ausgestaltet, dass die Größe des Gegenelementes 20 und des Verankerungselementes 34 im Wesentlich gleich ist, insbesondere dass beide als etwa gleich großer Querbolzen ausgebildet sind, nämlich mit möglichst gleich großer Länger und gleich großem Querschnitt, wie auch in der Fig. 4 gezeigt ist. Weiterhin ist eine Ausgestaltung günstig, bei der ein Abstand vom Verankerungselement 34 zur Außenblattansatzfläche 14 etwa genau so groß ist wie ein Abstand vom Gegenelement 20 zur Innblattansatzfläche 12.

Grundsätzlich wird der Verbindungsbolzen 28 bzw. Längsbolzen 28 in einer entsprechenden Längsbohrung 48 geführt. Diese Längsbohrung 48 bildet in soweit funktional ein einziges Objekt als der Verbindungs- bzw. Längsbolzen 28 vollständig dran geführt wird. Tatsächlich wird diese Längsbohrung 48 aber sowohl in dem Innenblattbefestigungsbereich 16 als auch dem Außenblattbefestigungsbereich vorgesehen, was üblicher Weise in mehreren Arbeitsschritten ausgeführt werden dürfte. Auch kann die Längsbohrung 48 unterschiedliche Durchmesser aufweisen, nämlich insbesondere einen größeren Durchmesser im Bereich der Dehnhülse 30. Dort wo keine Dehnhülse 30 vorgesehen ist, kann der Durchmesser der Längsbohrung sich an dem Außendurchmesser des Verbindungsbolzens 28 orientieren. Zur Vereinfachung der Fertigung wird vorgeschlagen, die Längsbohrung im Bereich zwischen dem Gegenelement 20 und der Innenblattansatzfläche 12 mit gleichem Durchmesser vorzusehen wie im Bereich der Dehnhülse 30. In diesem Fall können diese beiden Abschnitte der Längsbohrung 48 in einem Arbeitsgang und insbesondere mit einem Bohrer vorgesehen werden. Rein vorsorglich wird darauf hingewiesen, dass der Begriff Bohrung nicht zwingend bedeuten muss, dass tatsächlich auch diese Bohrung durch einen Bohrvorgang erstellt wurde.

In Fig. 4 ist zudem die erhöhte Materialstärke des Innenblattbefestigungsbereichs 16 bzw. Außenblattbefestigungsbereiches 18 gegenüber der Materialstärke der übrigen Blattschale 50 bzw. 52 des Rotorblattinnenteils 2 bzw. Rotorblattaußenteils 4 zu erkennen. Durch diese höhere Materialstärke können insbesondere das Gegenelement 20 und das Verankerungselement 34 aufgenommen werden. Zudem ist es hierdurch möglich, dass der längs zur Rotorblattoberfläche 26 geführte Verbindungsbolzen 28 aus dem Innenblattbefestigungsbereich 16 in den Innenraum 46 hinaustreten kann.

Fig. 5 zeigt eine Draufsicht auf eine Innenblattansatzfläche 12, in der 36 Verbindungsvorrichtungen und damit Verbindungsbolzen 28 und damit Längsbohrungen 48 vorgesehen sind.

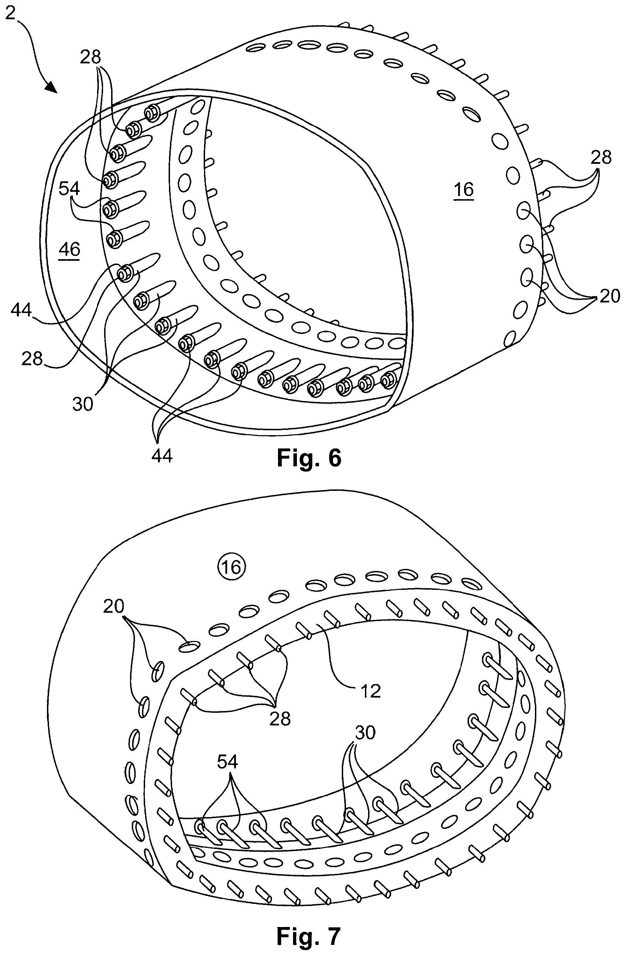

Die perspektivische Darstellung der Fig. 6 zeigt lediglich im Wesentlichen den Innenblattbefestigungsbereich 16. Entgegen der veranschaulichenden Darstellung der Fig. 6 wird der Innenblattbefestigungsbereich aber nicht getrennt von dem Rotorblattinnenteil 2 gefertigt.

Die Darstellung zeigt neben den Verbindungsbolzen 28, den Gegenelementen 20 insbesondere die aus dem Material des Innenblattbefestigungsbereichs 16 herausragenden Dehnhülsen 30. Die Dehnhülsen 30 ragen dabei in den Innenbereich 46 des Rotorblattinnenteils 2 und damit sind auch die Verspannmuttern bzw. Spannelemente 44 gut zugänglich. Zwischen den Verspannmuttern 44 und den Dehnhülsen 30 können Unterlegscheiben 54 vorgesehen sein. In einer Ausgestaltung können statt der Unterlegscheiben oder zusätzlich dazu Hilfsmittel für ein hydraulisches Anziehverfahren vorgesehen sein, wie z.B. eine etwa kegelförmige Unterlegscheibe zum Vergrößern einer stirnseitigen Abstützfläche an der Dehnhülse 30 zum Ansetzen eines hydraulischen Spannwerkzeugs.

Fig. 7 zeigt zur Fig. 6 lediglich eine andere Perspektive, die insbesondere die aus dem Innenblattbefestigungsbereiches 16 aus der Innenblattansatzfläche 12 herausragenden Verbindungsbolzen 28 darstellt. Trotz der hier gewählten Darstellung wird aber vorgeschlagen, eine tatsächliche Verbindung des Rotorblattinnenteils 2 mit dem Rotorblattaußenteil 4 so durchzuführen, dass die Verbindungsbolzen 28 zunächst in dem Verankerungselement 34 im Rotorblattaußenteil 4 befestigt werden, um dann in das Rotorblattinnenteil eingeführt zu werden. Alternativ können das Rotorblattinnenteil 2 und das Rotorblattaußenteil 4 aneinandergesetzt werden und Verbindungsbolzen vom Innenraum 46 des Blattinnenteils 2 aus durch die jeweilige Längsbohrung 48 eingesetzt und bis zum Verankerungselement 34 geführt werden, um dann in dem Verankerungselement 34 insbesondere durch Einschrauben befestigt zu werden. Im Anschluss daran kann eine Dehnhülse 30 und dann eine Verspannmutter 44 aufgesetzt und festgezogen werden.

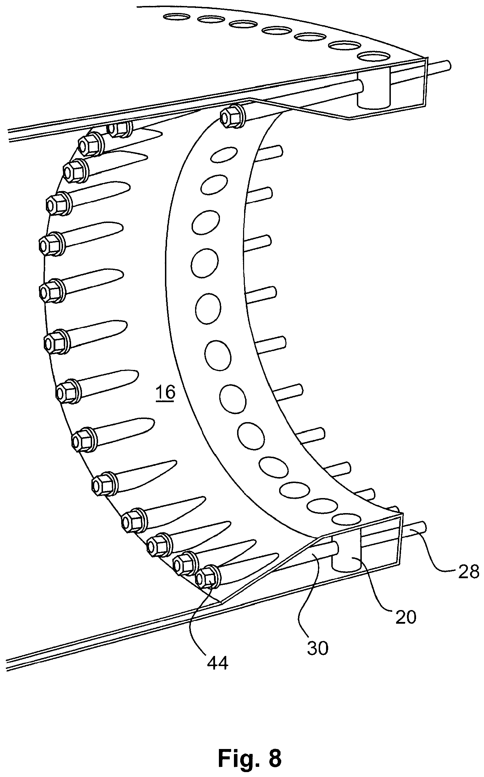

Fig. 8 zeigt eine perspektivische Darstellung, teilweise geschnittene und dabei veranschaulichende Darstellung eines Innenblattbefestigungsbereiches 16. Durch die Darstellung sind der Verbindungsbolzen 28, das Gegenelement 20, die Dehnhülse 30 und die Spannmutter 44 ebenfalls perspektivisch erkennbar, zumindest an zwei Stellen. Lediglich die Darstellung enthält einen Hohlraum im Bereich des Innenblattbefestigungsbereichs 16 und damit im Bereich des Gegenelementes 20 und teilweise der Dehnhülse 30. Dies dient der Veranschaulichung und tatsächlich wird zumindest vorzugsweise für den Innenblattbefestigungbereich 16 ein Vollmaterial angenommen insbesondere faserverstärkter Kunststoff wie glasfaserverstärkter Kunststoff oder kohleverstärkter Kunststoff. Insbesondere ist das gewählte Material im Innenblattbefestigungsbereich dasselbe wie im restlichen Teil des Rotorblattinnenteils bzw. in weiten Teilen des Rotorblattinnenteils. Vorzugsweise gilt Gleiches sinngemäß für das Rotorblattaußenteil.

Erfindungsgemäß wird somit eine vorteilhafte Verbindung eines Rotorblattinnenteils mit einem Rotorblattaußenteil vorgeschlagen. Dies kann auch als eine Verbindung zwischen Innenblatt und Außenblatt bezeichnet werden. Insbesondere wird vorgeschlagen, dass das Außenblatt mit einer Querbolzenverbindung ausgeführt wird, bei der ein Querbolzen mit einem Gewinde für einen Längsbolzen versehen ist. Das Innenblatt wird ebenfalls mit Querbolzen ausgestaltet, die jedoch ohne Gewinde für Längsbolzen versehen sind bzw. mit Durchgangsbohrungen und einer zum Anlagenmittelpunkt gerichteten ebene Stützfläche für Dehnhülsen ausgeführt ist, wobei die Verschraubung vom Innenblatt aus erfolgt.

Vorteilhaft ist insbesondere, dass eine Verschraubung vom Inneren des Blattes zugänglich ist, was für Wartung und Montage vorteilhaft ist. Die Befestigung kann so erfolgen, dass lediglich eine geringe oder sogar gar keine Konturbeeinflussung der Außenfläche des Rotorblattes resultiert. Das Verfahren ermöglicht auch eine automatisierbare Herstellung.

Durch die vorgeschlagenen Lösungen kann somit ein Rotorblatt geteilt werden, so dass zwei kürzere Teile entstehen. Diese verkürzten Teile können insbesondere leichter transportiert werden. Grundsätzlich kann ein solches Rotorblatt von vornherein entsprechend in zwei Teile bei der Fertigung aufgeteilt sein oder das Rotorblatt wird in einem Stück gefertigt und im Nachhinein an einer entsprechenden Verbindungsstelle aufgetrennt. Im Bereich dieser Verbindungsstelle können bereits Vorkehrungen zur Verbindung vorgenommen worden sein, wie beispielsweise das Einbringen der Querbolzen, nämlich der Gegenelemente und/oder der Verankerungselemente 20 bzw. 34. Es wird eine Verbindungsmöglichkeit von Rotorblattteilen, insbesondere Außenblatt und Innenblatt geschaffen, bei der beide Rotorblattteile aus faserverstärktem Kunststoff hergestellt sein können. Dabei können beide Teile aus gleichem oder anderem faserverstärktem Kunststoff hergestellt sein. So wird grundsätzlich auch die Verbindung eines kohlefaserverstärktem Kunststoffs teils mit einem glasfaserverstärktem Kunststoffteil ermöglicht.

Hierdurch kann eine Erleichterung des Transportes der Rotorblätter erreicht werden und beim Aufbau können möglicherweise kleinere Kräne verwendet werden. Hierdurch kann es auch möglich werden, schwer zugängliche Bereiche wie beispielsweise Bergregionen besser oder leichter erreichbar zu machen.

Weiterhin kann für lange Rotorblätter, insbesondere solche die über 45 Meter lang sind, nun auch ein Bahntransport ermöglicht werden. Vorteilhaft können auch Reduzierungen von Transport und Aufbaukosten sein, so wie eine Verbesserung der Zugänglichkeit schwer zu erreichender Standorte.

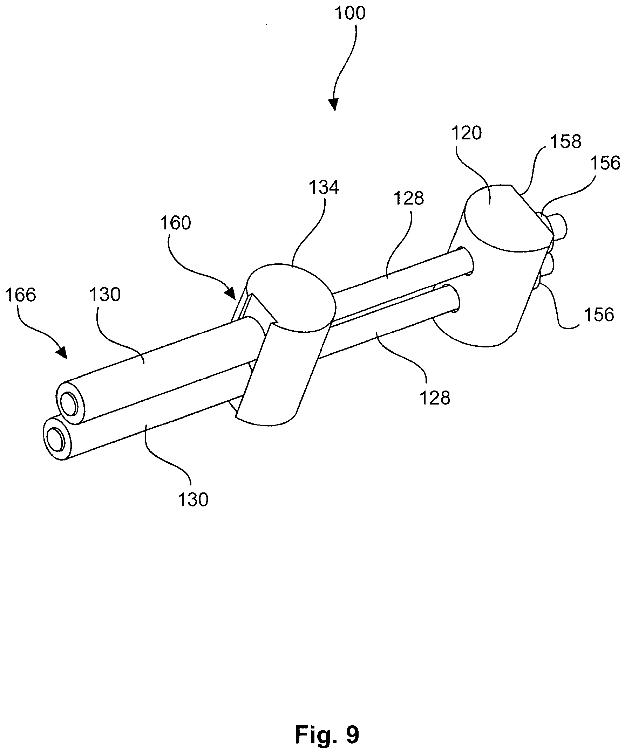

Fig. 9 zeigt eine Verbindungsvorrichtung 100, die nicht Teil der Erfindung ist. Diese Verbindungsvorrichtung 100 umfasst ein Verankerungselement 134 und ein Gegenelement 120, die über zwei Verbindungsbolzen 128 miteinander verbunden sind und bei bestimmungsgemäßer Anordnung gegeneinander verspannt werden können. Dabei ist bestimmungsgemäß das Verankerungselement 134 in einem Rotorblattaußenteil und das Gegenelement 120 in einem Rotorblattinnenteil anzuordnen, oder umgekehrt, um dadurch das Rotorblattinnenteil und das Rotorblattaußenteil fest miteinander zu verbinden. Die Verbindungsbolzen 128 werden an dem Gegenelement 120 dadurch befestigt, dass sie von dem Verankerungselement 134 aus durch das Gegenelement 120 zu einem aufgesetzten Befestigungsmittel 156 hindurch reichen. Das Befestigungsmittel 156, das als Schraubenmutter ausgebildet und aufgeschraubt sein kann, liegt an einer Anlagefläche 158 des Gegenelementes 120 an. Das Befestigungselement 156, bildet auch ein Verspannelement und kann zum Verspannen angezogen werden.

Jeder Verbindungsbolzen 128 reicht zudem durch das Verankerungselement 134 hindurch und ist mit einer Dehnhülse 130 versehen, die an einem Andruckbereich 160 des Verankerungselementes 134 anliegt. Das Gegenelement 120 und das Verankerungselement 134 sind somit zwischen den Dehnhülsen 130 und den Befestigungsmitteln 156 angeordnet. Durch die Verwendung von zwei Verbindungsbolzen 128 für diese Verbindungsvorrichtung 100 kann eine Spannkraft jeweils an zwei Stellen in das Gegenelement 120 bzw. das Verankerungselement 134 eingeleitet werden. Jedes Verankerungselement 134 und Gegenelement 120 kann entsprechend länger ausgebildet sein, um eine Spannkraft auf einer möglichst großen Fläche in ein Rotorblattinnenteil bzw. Rotorblattaußenteil einzubringen.

Die Dehnhülse 130, die gemäß Fig. 9 auf den Verbindungsbolzen 128 aufgesetzt ist, weist an ihrem dem Verankerungselement 134 abgewandten Ende einen Gewindeabschnitt 166 mit Innengewinde auf, in den der Verbindungsbolzen eingeschraubt ist. Die Dehnhülse kann alternativ auch durch einen entsprechenden Kopf des Verbindungsbolzens 128 gehalten werden, oder durch ein dort angeordnetes Verspannmittel gehalten und verspannt werden, wie z.B. eine Schraubenmutter.

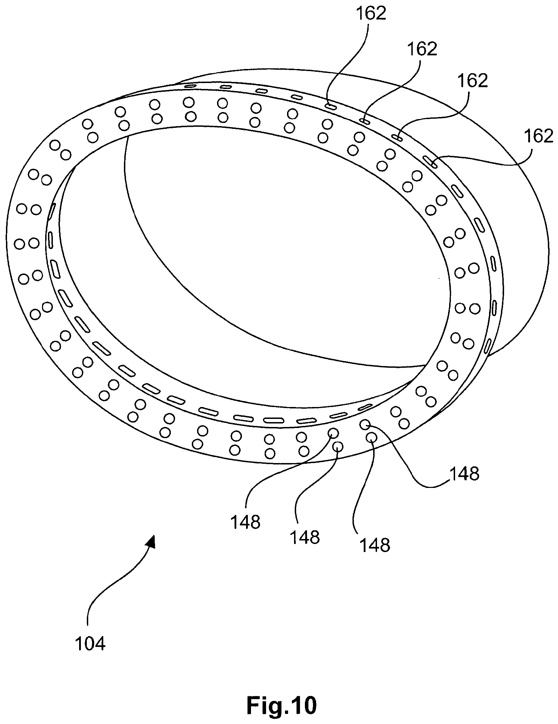

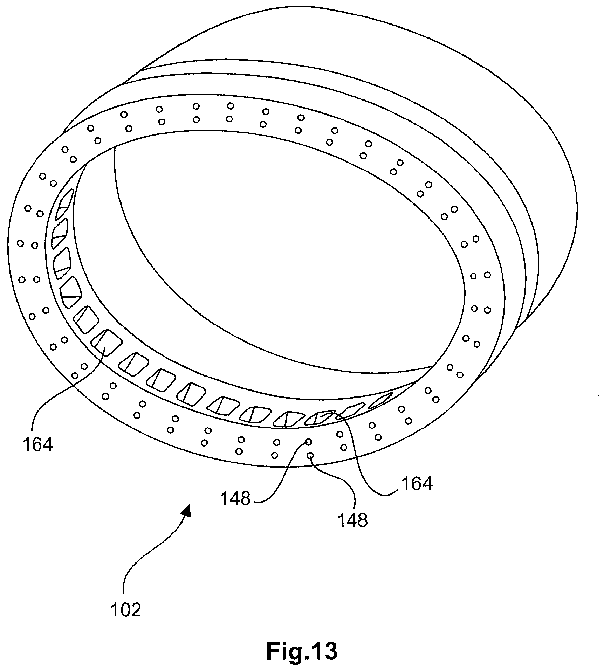

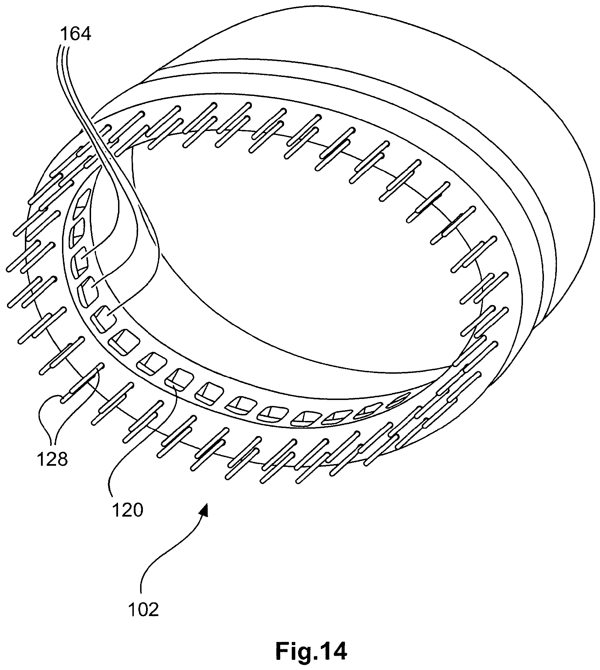

Fig. 10 zeigt einen Teil eines Rotorblattaußenteils 104, das nicht Teil der Erfindung ist. Zum Verbinden dieses Rotorblattaußenteils 104 mit einem Rotorblattinnenteil 102, das in den Fig. 13 und 14 erläutert wird, sind mehrere Querbohrungen 162 vorgesehen zum Aufnehmen jeweils eines Verankerungselementes 134. Zum Durchführen eines Verbindungsbolzens 128 sind Längsbohrungen 148 vorgesehen, nämlich jeweils zwei Längsbohrungen 148 zu einer Querbohrung 162. Alle Längsbohrungen 148 bilden somit eine umlaufende, zweireihige Anordnung dieser Längsbohrungen 148.

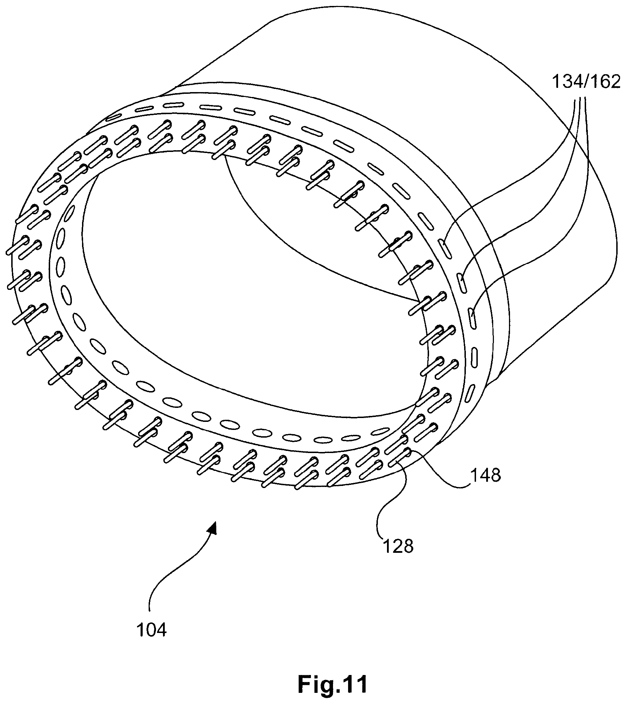

Fig. 11 zeigt in einer gegenüber Fig. 10 etwas gedrehten Perspektive den Teil des Rotorblattaußenteils 104 der Fig. 10 mit eingesetzten Teilen der Verbindungsvorrichtung 100 gemäß Fig. 9. Davon ist jeweils ein Verankerungselement 134 in eine Querbohrung 162 eingesetzt. Außerdem ist durch jede Längsbohrung 148 jeweils ein Verbindungsbolzen 128 durchgeführt. Dehnhülsen 130 sind in dieser Fig. 11 nicht dargestellt.

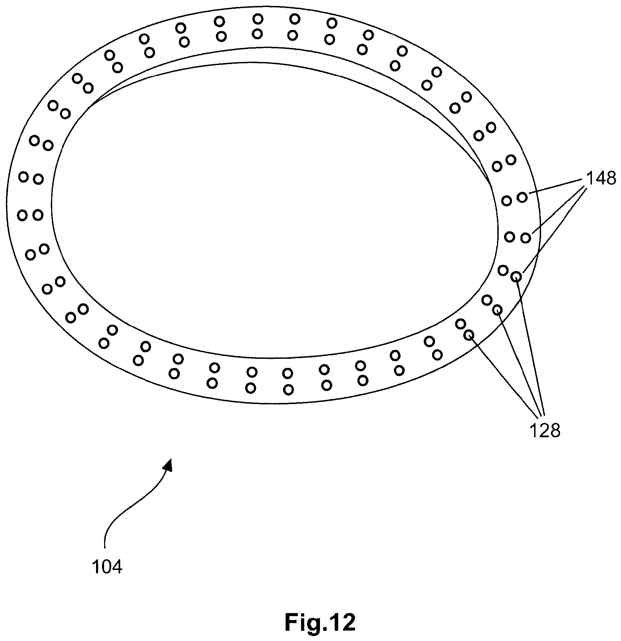

Fig. 12 zeigt eine axiale Sicht auf den in Fig. 11 dargestellten Teil des Rotorblattaußenteils 104. In dieser axialen Draufsicht diesen Verbindungsbereich sind die vielen Längsbohrungen 148 und die darin angeordneten Verbindungsbolzen 128 zu erkennen.

Fig. 13 zeigt einen Teil eines Rotorblattinnenteils 102, das nicht Teil der Erfindung ist, mit Queraufnahmen 164 zum Aufnehmen jeweils eines Gegenelementes 120. Es ist zu erkennen, dass die Queraufnahme 164 nur eine Öffnung zum Innenraum des Rotorblattinnenteils 102 aufweist. Zum Vergleich sei auf die Querbohrung 162 des Rotorblattaußenteils 104 verwiesen, die jeweils vollständig von außen nach innen reicht.

Jede Queraufnahme 164 weist zudem zwei Längsbohrungen 148 auf. Für diese Längsbohrungen im Rotorblattinnenteil 102 ist somit dasselbe Bezugszeichen gewählt worden wie für die Längsbohrungen 148 des Rotorblattaußenteils 104, um zu verdeutlichen, dass von einer Verbindungsvorrichtung 100 jeweils ein Verbindungsbolzen 128 durch eine solche Längsbohrung 148 im Rotorblattinnenteil 102 und auch durch eine korrespondierend angeordnete Längsbohrung 148 im Rotorblattaußenteil 104 reicht.

Fig. 14 zeigt das Rotorblattinnenteil 102, das nicht Teil der Erfindung ist, mit Teilen eingesetzter Verbindungsvorrichtungen 100, nämlich mit jeweils einem Gegenelement 120 und zwei Verbindungsbolzen 128. Es ist erkennbar, dass neben dem Gegenelement 120 bzw. dahinter viel Freiraum verblieben ist. Dieser kann dazu genutzt werden, die Befestigungsmittel 156 bzw. Verspannmittel 156 aufzunehmen und ggf. auch Platz zum Festziehen dieser bereit zu halten, um die Verbindungsvorrichtung 100 zu verspannen. Diese insoweit großzügigen Queraufnahmen 164 sind somit bevorzugt im Rotorblattinnenteil angeordnet, um von diesem aus ein Verspannen unter Verwendung der Befestigungsmittel 156 durchzuführen. Die Befestigungsmittel 156 sind hierfür in dem Rotorblattinnenteil 102 angeordnet und damit besser erreichbar, im Vergleich zu einer theoretischen Anodieser rdnung im Rotorblattaußenteil.

Die beschriebenen Dehnhülsen 130, die in Fig. 9 gezeigt sind, können eine Verspannspannung aufnehmen und bereit halten und insbesondere bei geringen z. B. thermischen Längenveränderungen des Verbindungsbolzens 128 oder anderer relevanter Elemente eine Spannkraft aufrecht erhalten. Dazu ist es grundsätzlich unerheblich, ob auf der Seite der Dehnhülse 30 bzw. 130 oder beim oder am Befestigungsmittel 156 verspannt wird. Das Verspannen im Rotorblattinnenteil 102 und damit, gemäß der gezeigten Ausführungsform, an dem Befestigungsmittel 156 bzw. Verspannmittel 156 ist dabei eine vorteilhafte Ausgestaltung.

## Patentansprüche

1. Windenergieanlagen-Rotorblatt zur Befestigung an einer Rotornabe und mit einer Rotorblattlängsachse, umfassend
- ein zur Rotornabe gewandtes Rotorblattinnenteil (2) und
- ein von der Rotornabe abgewandtes Rotorblattaußenteil (4),
wobei das Rotorblattinnenteil (2) und das Rotorblattaußenteil (4) mittels wenigstens einer Verbindungsvorrichtung (100) miteinander verbunden sind, und die Verbindungsvorrichtung (100) umfasst
- wenigstens ein in dem Rotorblattaußenteil (4) verankertes Verankerungselement (34),
- wenigstens ein in dem Rotorblattinnenteil (2) verankertes Gegenelement (20),
- wenigstens einen, durch das Gegenelement (20) hindurch reichenden und in oder an dem Verankerungselement (34,) befestigten Verbindungsbolzen (28), wobei
das Rotorblattaußenteil (4) im Bereich des Verankerungselementes (34) und das Rotorblattinnenteil (2) im Bereich des Gegenelementes (20) jeweils einen Verankerungsbereich mit erhöhter Materialstärke einer Rotorblattschale aufweist und wobei in dem Verankerungsbereich für jede Verbindungsvorrichtung (100) eine Längsbohrung (48) vorgesehen ist, die im wesentlichen parallel zur Rotorblattlängsachse oder parallel zu einer Rotorblattoberfläche (26) verläuft, wobei
- die Längsbohrung (48) im Rotorblattaußenteil (4) von einer Stoßfläche zum Ansetzen an das Rotorblattinnenteil (2) zu einer Querbohrung (162) zum Aufnehmen der Verankerungselemente (34) verläuft, so dass der Verbindungsbolzen (28) von der Stoßfläche bis zum Verankerungselement (34) reichen kann und
- die Längsbohrung (48) im Rotorblattinnenteil (2) von einer Stoßfläche zum Ansetzen an das Rotorblattaußenteil (4) vollständig durch den Verankerungsbereich hindurch verläuft, um in einem Innenbereich des Rotorblattinnenteils (2) zu enden, in dem die Materialstärke so dünn ist, dass die Bohrung (48) vollständig aus dem Verankerungsbereich hervortritt, so dass der Verbindungsbolzen (28) von der Stoßfläche bis in den Innenbereich reichen kann.

2. Rotorblatt nach Anspruch 1,
**dadurch gekennzeichnet, dass** das Rotorblattinnenteil (2) und/oder das Rotorblattaußenteil (4) jeweils im Wesentlichen aus einem faserverstärkten Kunststoff besteht, insbesondere aus glasfaserverstärktem Kunststoff oder kohlefaserverstärktem Kunststoff.

3. Rotorblatt nach einem der vorstehenden Ansprüche,
**dadurch gekennzeichnet, dass** das Verankerungselement (34) als Querbolzen ausgebildet ist, mit einer im wesentlichen quer zur Rotorblattlängsachse angeordneten Bolzenachse (24) und/oder dass das Verankerungselement (34) eine quer zur Bolzenachse (24) und im wesentlichen parallel zu einer Rotorblattoberfläche (26) angeordneten Bohrung mit Innengewinde zum befestigenden Aufnehmen des Verbindungsbolzens (28) aufweist.

4. Rotorblatt nach einem der vorstehenden Ansprüche,
**dadurch gekennzeichnet, dass** das Gegenelement (20) als Querbolzen ausgebildet ist, mit einer im Wesentlichen quer zur Rotorblattlängsachse angeordnete Bolzenachse (24) und/oder dass das Gegenelement (20) eine quer zur Bolzenachse (24) angeordneten Durchgangsbohrung zum Durchführen des Verbindungsbolzens (28) aufweist, wobei die Durchgangsbohrung insbesondere kein Innengewinde aufweist.

5. Rotorblatt nach einem der vorstehenden Ansprüche,
**dadurch gekennzeichnet, dass** der Verbindungsbolzen (28) in dem Verankerungselement (34) befestigt, insbesondere eingeschraubt, ist, von dem Verbindungselement durch das Gegenelement (20) hindurch ragt und an einer zum Verankerungselement (34) abgewandten Seite des Gegenelementes (20, 120) mit einem Spannmittel, insbesondere einer Schraubenmutter (44), zum Verspannen gegen das Gegenelement (20) versehen ist, um dadurch das Verankerungselement (34) und das Gegenelement (20) gegeneinander zu ziehen.

6. Rotorblatt nach Anspruch 5,
**dadurch gekennzeichnet, dass** zwischen dem Gegenelement (20) und dem Spannmittel (44) eine Dehnhülse (30) angeordnet ist.

7. Rotorblatt nach einem der vorstehenden Ansprüche,
**dadurch gekennzeichnet, dass** das Gegenelement (20, 120) im Bereich einer bzw. der Durchgangsbohrung eine abgeflachte Anlagefläche zum Ansetzen eines bzw, des Spannmittels (44) aufweist.

8. Rotorblatt nach einem der vorstehenden Ansprüche, **dadurch gekennzeichnet, dass** die Verbindungsvorrichtungen (100), oder jeweils ein Teil davon in mehreren Reihen, insbesondere bezogen auf eine Rotorblattmittelachse, in einer inneren und einer äußeren Reihe angeordnet sind, und/oder dass die Verbindungsvorrichtungen (100) jeweils mehrere Verbindungsbolzen (28) aufweisen.

9. Rotorblatt nach einem der vorstehenden Ansprüche, **dadurch gekennzeichnet, dass** eine Verbindungsvorrichtung (100) jeweils ein Verankerungselement (34), ein Gegenelement (20) und mehrere, insbesondere zwei Verbindungsbolzen (28) aufweist.

10. Rotorblatt nach einem der vorstehenden Ansprüche, **dadurch gekennzeichnet, dass** die Verbindungsvorrichtung (100) so ausgebildet ist, dass der bzw. jeder Verbindungsbolzen (28) durch das Verankerungselement (34) hindurch zu einer Dehnhülse (30) reicht und in der Dehnhülse (30) an einem zum Verankerungselement (34) abgewandten Befestigungsabschnitt mit der Dehnhülse (30) verschraubt ist,

11. Windenergieanlage mit einem Rotor mit wenigstens einem Rotorblatt nach einem der Ansprüche 1 bis 10.

## Claims

1. A wind power installation rotor blade for fixing to a rotor hub and having a rotor blade longitudinal axis, including
- a rotor blade inner part towards the rotor hub (2), and
- a rotor blade outer part (4) away from the rotor hub,
wherein the rotor blade inner part (2) and the rotor blade outer part (4) are connected together by means of at least one connecting device (100) and the connecting device (100) includes
- at least one anchoring element (34) anchored in the rotor blade outer part (4),
- at least one counterpart element (34) anchored in the rotor blade inner part (2), and
- at least one connecting bolt (28) which extends through the counterpart element (20) and is fixed in or to the anchoring element (34), wherein
the rotor blade outer part (4) in the region of the anchoring element (34) and the rotor blade inner part (2) in the region of the counterpart element (20) respectively have an anchoring region with increased material thickness of a rotor blade shell, and wherein provided in the anchoring region for each connecting device (100) is a longitudinal bore (48) extending substantially parallel to the rotor blade longitudinal axis or parallel to a rotor blade surface (26), wherein
- the longitudinal bore (48) in the rotor blade outer part (4) extends from an abutment surface for fitment to the rotor blade inner part (2) to a transverse bore (62) for receiving the anchoring elements (34) so that the connecting bolt (28) can extend from the abutment surface to the anchoring bolt element (34), and
- the longitudinal bore (48) in the rotor blade outer part (4) extends from an abutment surface for fitment to the rotor blade outer part (4) completely through the anchoring region to end in an inner region of the rotor blade inner part (2) in which the material thickness is so thin that the bore (48) emerges completely from the anchoring region so that the connecting bolt (28) can extend from the abutment surface into the inner region.

2. A rotor blade according to claim 1 **characterised in that** the rotor blade inner part (2) and/or the rotor blade outer part (4) respectively substantially comprises a fibre-reinforced plastic, in particular glass fibre-reinforced plastic or carbon fibre-reinforced plastic.

3. A rotor blade according to one of the preceding claims **characterised in that** the anchoring element (34) is in the form of a transverse bolt having a bolt axis (24) arranged substantially transversely to the rotor blade longitudinal axis, and/or the anchoring element (34) has a bore arranged transversely relative to the bolt axis (24) and substantially parallel to a rotor blade surface (26) and having a female thread for fixingly receiving the connecting bolt (28).

4. A rotor blade according to one of the preceding claims **characterised in that** the counterpart element (20) is in the form of a transverse bolt having a bolt axis (24) arranged substantially transversely to the rotor blade longitudinal axis, and/or the counterpart element (20) has a through bore arranged transversely relative to the bolt axis (24) for passing the connecting bolt (28) therethrough, wherein the through bore in particular does not have a female thread.

5. A rotor blade according to one of the preceding claims **characterised in that** the connecting bolt (28) is fixed, in particular screwed in the anchoring element (34), projects from the connecting element through the counterpart element (20) and is provided at a side of the counterpart element (20), that is away from the anchoring element (34), with a clamping means, in particular a screw nut (44), for bracing against the counterpart element (20) in order thereby to pull the anchoring element (34) and the counterpart element (20) against each other.

6. A rotor blade according to claim 5 **characterised in that** an expansion sleeve (30) is disposed between the counterpart element (20) and the clamping means (44).

7. A rotor blade according to one of the preceding claims **characterised in that** in the region of a or the through bore the counterpart element (20) has a flattened contact surface for fitment of a or the clamping means (44).

8. A rotor blade according to one of preceding claims **characterised in that** the connecting devices (100) or a respective part thereof are arranged in a plurality of rows, in particular in relation to a rotor blade central axis, in an inner and an outer row, and/or the connecting devices (100) each have a plurality of connecting bolts (28).

9. A rotor blade according to one of the preceding claims **characterised in that** a connecting device (100) respectively has an anchoring element (34), a counterpart element (20) and a plurality of and in particular two connecting bolts (28).

10. A rotor blade according to one of the preceding claims **characterised in that** the connecting device (100) is of such a configuration that the or each connecting bolt (28) extends through the anchoring element (34) to an expansion sleeve (30) and is screwed in the expansion sleeve (30) at a fixing portion facing away from the anchoring element (34) to the expansion sleeve (30).

11. A wind power installation comprising a rotor having at least one rotor blade according to one of claims 1 to 10.

## Revendications

1. Pale de rotor d'éolienne destinée à être fixée au niveau d'un moyeu de rotor et avec un axe longitudinal de pale de rotor, comprenant
- une partie intérieure de pale de rotor (2) tournée vers le moyeu de rotor et
- une partie extérieure de pale de rotor (4) opposée au moyeu de rotor,
dans laquelle la partie intérieure de pale de rotor (2) et la partie extérieure de pale de rotor (4) sont reliées entre elles au moyen d'au moins un dispositif de liaison (100), et le dispositif de liaison (100) comprend
- au moins un élément d'ancrage (34) ancré dans la partie extérieure de pale de rotor (4),
- au moins un contre-élément (20) ancré dans la partie intérieure de pale de rotor (2),
- au moins un boulon de liaison (28) parvenant à travers le contre-élément (20) de part en part et fixé dans ou au niveau de l'élément d'ancrage (34),
dans laquelle
la partie extérieure de pale de rotor (4) dans la zone de l'élément d'ancrage (34) et la partie intérieure de pale de rotor (2) dans la zone du contre-élément (20) présentent respectivement une zone d'ancrage avec une épaisseur de matériau augmentée d'une coque de pale de rotor et dans laquelle est prévu, dans la zone d'ancrage pour chaque dispositif de liaison (100), un alésage longitudinal (48), qui s'étend sensiblement de manière parallèle par rapport à l'axe longitudinal de pale de rotor ou de manière parallèle par rapport à une surface de pale de rotor (26), dans laquelle
- l'alésage longitudinal (48) s'étend dans la partie extérieure de pale de rotor (4) depuis une surface d'aboutement destinée à être placée au niveau de la partie intérieure de pale de rotor (2) vers un alésage transversal (162) servant à recevoir les éléments d'ancrage (34) de sorte que le boulon de liaison (28) peut parvenir depuis la surface d'aboutement jusqu'à l'élément d'ancrage (34) et
- l'alésage longitudinal (48) s'étend, dans la partie intérieure de pale de rotor (2) depuis une surface d'aboutement destinée à être placée au niveau de la partie extérieure de pale de rotor (4) en totalité à travers la zone d'ancrage de part en part pour finir dans une zone intérieure de la partie intérieure de pale de rotor (2), dans laquelle l'épaisseur de matériau est si fine que l'alésage (48) ressort en totalité de la zone d'ancrage de sorte que le boulon de liaison (28) peut parvenir depuis la surface d'aboutement jusque dans la zone intérieure.

2. Pale de rotor selon la revendication 1,
**caractérisée en ce que** la partie intérieure de pale de rotor (2) et/ou la partie extérieure de pale de rotor (4) sont constituées respectivement sensiblement d'une matière synthétique renforcée par des fibres, en particulier d'une matière synthétique renforcée par des fibres de verre ou d'une matière synthétique renforcée par des fibres de carbone.

3. Pale de rotor selon l'une quelconque des revendications précédentes,
**caractérisée en ce que** l'élément d'ancrage (34) est réalisé sous la forme d'un boulon transversal, avec un axe de boulon (24) disposé sensiblement de manière transversale par rapport à l'axe longitudinal de pale de rotor, et/ou que l'élément d'ancrage (34) présente un alésage disposé de manière transversale par rapport à l'axe de boulon (24) et sensiblement de manière parallèle par rapport à une surface de pale de rotor (26), avec un filetage intérieur servant à recevoir par fixation le boulon de liaison (28).

4. Pale de rotor selon l'une quelconque des revendications précédentes,
**caractérisée en ce que** le contre-élément (20) est réalisé sous la forme d'un boulon transversal, avec un axe de boulon (24) disposé sensiblement de manière transversale par rapport à l'axe longitudinal de pale de rotor, et/ou que le contre-élément (20) présente un alésage de passage disposé de manière transversale par rapport à l'axe de boulon (24), servant au passage du boulon de liaison (28), dans laquelle l'alésage de passage ne présente en particulier aucun filetage intérieur.

5. Pale de rotor selon l'une quelconque des revendications précédentes,
**caractérisée en ce que** le boulon de liaison (28) est fixé, en particulier est vissé, dans l'élément d'ancrage (34), dépasse de l'élément de liaison en passant par le contre-élément (20) de part en part et est pourvu au niveau d'un côté, opposé à l'élément d'ancrage (34), du contre-élément (20, 120) d'un moyen de serrage, en particulier d'un écrou de vis (44), servant au serrage contre le contre-élément (20) pour ainsi tirer l'un contre l'autre l'élément d'ancrage (34) et le contre-élément (20).

6. Pale de rotor selon la revendication 5,
**caractérisée en ce qu'**un manchon extensible (30) est disposé entre le contre-élément (20) et le moyen de serrage (44).

7. Pale de rotor selon l'une quelconque des revendications précédentes,
**caractérisée en ce que** le contre-élément (20, 120) présente dans la zone d'un ou de l'alésage de passage une surface d'appui aplatie servant à placer un ou le moyen de serrage (44).

8. Pale de rotor selon l'une quelconque des revendications précédentes, **caractérisée en ce que** les dispositifs de liaison (100), ou respectivement une partie de ceux-ci en plusieurs rangées, sont disposés, en particulier par rapport à un axe médian de pale de rotor, en une rangée intérieure et une rangée extérieure, et/ou que les dispositifs de liaison (100) présentent respectivement plusieurs boulons de liaison (28) .

9. Pale de rotor selon l'une quelconque des revendications précédentes, **caractérisée en ce qu'**un dispositif de liaison (100) présente respectivement un élément d'ancrage (34), un contre-élément (20) et plusieurs, en particulier deux boulons de liaison (28).

10. Pale de rotor selon l'une quelconque des revendications précédentes, **caractérisée en ce que** le dispositif de liaison (100) est réalisé de telle sorte que le ou chaque boulon de liaison (28) parvient, à travers l'élément d'ancrage (34) de part en part, à un manchon extensible (30) et est vissé dans le manchon extensible (30) au niveau d'une section de fixation opposée à l'élément d'ancrage (34) au manchon extensible (30).

11. Eolienne avec un rotor avec au moins une pale de rotor selon l'une quelconque des revendications 1 à 10.
